# EUROPEAN PATENT SPECIFICATION

(11) **EP 0 639 440 B1**
(45) Date of publication and mention of the grant of the patent: **14.11.2001**
(21) Application number: 94306159.8
(22) Date of filing: 19.08.1994
(51) Int. Cl.: B29C 44/36, B29C 44/12

(54) **Method of constructing a molded composite article comprising a foam backing**
Verfahren zur Herstellung eines geformten Verbundgegenstandes mit Schaumstoffrückseite
Procédé de fabrication d'objet composite moulé avec dos en mousse

(30) Priority: 19.08.1993 US 108236
(43) Date of publication of application: 22.02.1995
(73) Proprietor: DAVIDSON TEXTRON INC., Dover New Hampshire 03820-1504 (US)
(72) Inventor: Grimmer, Robert A., Berwick, Maine 03901 (US)
(74) Representative: Burrows, Anthony Gregory

(56) References cited:
- DE-A- 3 324 038
- DE-A- 3 615 498
- FR-A- 2 545 039
- DATABASE WPI Section Ch, Week 9210 Derwent Publications Ltd., London, GB; Class A32, AN 92-075359 & JP-A-04 018 315 (NISHIKAWA KASEI KK) , 22 January 1992

## Description

This invention relates to a method of constructing a molded composite article, and more particularly to a method of constructing a molded composite article comprising a shaped foam cushion, such as an automotive interior trim component.

Various methods of constructing molded composite articles including foam plastics are already known, for example from JP-A-04018315, FR-A-2545039 and DE-A-3324038.

In JP-A-04018315, a surface sheet which consists of polyvinyl chloride resin sheet and a cushioning sheet is vacuum formed. Then a speaker grille is attached to the molded surface sheet so that its edge is fitted into the concave of the molded surface sheet. Both the molded surface sheet and the speaker grille are vacuum formed on a lower mold of a foaming mold. After glass fibres are put on the lower mold polyurethane resin is sprayed and is foamed as plastic foam between the upper and lower molds. The advantage is stated to be that the door is trim molded easily with the speaker grille without using a core.

FR-A-2545039 discloses various embodiments of flat composite bodies of polyurethane and fibres, methods for their preparation, and their utilisation. In a preferred embodiment of the method of preparation, a flat fibrous item is deposited in an open molding tool, where it is sprayed with a polyurethane duromer mixture. Nevertheless, it is also possible to spray the flat fibrous item outside the molding tool, and then to deposit the flat fibrous item impregnated with the polyurethane duromer mixture in the open molding tool. This operational variant is advantageously used when, as flat fibrous items, premolded objects in the form of cloth, woven material or non-woven glass fabric are used that have, for instance, the shape of half-molds for suitcases or coolers or cylindrical half-molds for pipes. The flat fibrous item and the expandable duromer polyurethane mixture are introduced into the molding tool in such quantities that the expansion in the closed molding tool preferably takes place under compression and that a compression rate of 1.2 to 10, and more specifically between 1.5 and 4, is established. Molding and complete curing are done at molding tool temperatures of 50 to 120°C, preferably from 60 to 100°C, and more specifically from 80 to 100°C.

If desired, it is possible simultaneously to cover the flat composite polyurethane and fiber bodies in the molding tools during molding and curing on one side or both sides by a separation sheet or a decorative matter, preferably a metal sheet or a metallic foil of a thickness which can be up to 0.3mm. For this purpose, the inside walls of the open molding tool are provided with the matters in question on one face or both faces, then the flat fibrous item impregnated by the expandable polyurethane duromer mixture is introduced into the mold. Expansion and complete curing are carried out as described above.

As separation sheets or decorative matters, colorless or directly colored or printed, are for instance fibrous woven material or cloths of synthetic or natural fibers, metal sheets, for example of aluminium, copper, brass, or gold or steel, polyvinyl chloride, acrylo-nitrile-butadiene-styrene polymers, polyamides, polyesters, polyethylene, polypropylene, esters or ester mixtures of cellulose, cardboard or sheets of paper as well as preimpregnated items thickened with unsaturated polyester resins.

The composite flat polyurethane and fiber bodies have uses as coherent covering pieces, reinforcement parts or molded objects in the railway carriage, vehicle and aeronautical industry, for example as roofs, door and wall surfacings, trays, dashboard panels and motor housing surfacings. However, the products are also used in the furniture industry, in gramophone and television technology, and in the building industry as surfacings.

DE-A-3324038 discloses composite molded parts which can be manufactured by either of two variants of a process. In both process variants, initially, in a conventional manner, there is applied to a textile floor covering that may be woven, tufted, raschel-knitted, knitted or stitched, a heat-deformable layer of polyethylene or a corresponding dispersion which may, if expedient, also have the purpose of anchoring or stabilizing the pole or base material. The floor covering thus pretreated is cut to size in accordance with the predetermined dimensions of the molded part to be manufactured and, after a reverse side heat treatment, is deformed in a press. The allegedly novel part of the process concerns the further processing of the molded floor covering parts into composite molded parts.

In a first variant, the premolded floor covering is deposited on a carrier mold matching its outer contour. With this carrier mold, the floor covering is passed through a heating zone, in which its reverse side is heated beyond the reaction temperature causing foaming of the plastic mixture. Then the mold and floor covering are conveyed to a spray chamber, in which are present stationary spray heads and a spray head adjustable back and forth in a transverse guide. The spray heads apply the foamable plastic mixture to the floor covering. By control of the movement of the adjustable spray head and the quantities supplied to the individual spray heads, varying quantities of the foamable plastic mixture can be applied to the reverse side of the floor covering. At the start of the spray deposit, only a relatively small amount of the plastic mixture is initially applied and the foaming reaction starts immediately, so that this plastic mixture penetrates the reverse side of the floor covering to form a film, which constitutes a barrier layer that prevents further penetration of the foamable plastic mixture into the textile floor covering.

After application of the necessary amount of the plastic mixture, a countermold is arranged above the carrier mold, leaving air gaps between them. This happens in a press downstream of the spray chamber. Here, the incompletely reacted foam, formed of the plastic mixture, is molded into the predetermined final shape.

Into the countermold, inserts, such as insulating mats, heavy layer mats, foils or prefabricated foam items can be inserted and pressed into the foam so that they are bonded with the foam body by the forming covering film of the foam. After foaming ends, the carrier mold and the countermold are separated and, if desired, the finished composite element is conveyed to a trimming station or moved on for additional processing or storage.

In the second variant, the countermold has pour-in openings and, instead of the spray chamber and the press of the first variant, a pouring zone is provided in which, through the pour-in openings of the countermold, the foamable plastic mixture is applied to the reverse side of the cut-to-size and premolded floor covering. Here again, air gaps are left to assure freedom from pressure during supply and reacting of the foamable plastic mixture. By the number, arrangement and supply of the pour-in openings, again the amount of the foamable plastic mixture supplied per unit of surface can be adjusted to the required various thicknesses of the finished foam body. Here again, a separating layer forms on the floor covering and prevents soaking. Again, into the countermold, additional materials can be inserted, which are ultimately bonded into the foam body. After the foaming reaction ends, the molded part is conveyed to a trimming station or the like, after having been removed from the mold.

By the process of DE-A-3324038, it is not only possible to manufacture molded floor parts but also other composite molded parts of textiles and foam, for example built-in parts for side panels and canopies in motor vehicles.

Historically, poor foam formation in the construction of automotive interior trim components such as instrument pads, door panels, arm rests, glove boxes, center consoles and close-out panels has been the foremost cause of scrap and repair related problemsin production.

Urethane foam defects of underfills, voids, rattyfoam cell structure, and poor mix are a major manufacturing problem plaguing the entire industry that produce automotive interior trim components, that use a composite construction of a thermoplastic cover, a metal or plastic insert and urethane foam to fill the space between the cover and the insert.

In addition to the manufacturing defects, poor urethane foam formation can and does cause field failures of the assembled products. Field failures are exhibited in a number of forms.

"Tiger Striping", that is, color changes or staining can be caused by inadequate mixing of the urethane components; isocyanate and polyol.

"Measles" are generally associated with ratty cell formation or small multiple voids which cause an undesired rough irregular surface to the cover.

"Sinks" are another defect caused by large voids in the urethane foam. In this case the void is largeenough for the cover stock to sink into the void, causing a depression in the cover.

While poor urethane foam quality has been an ongoing problem in the manufacturing plants for years, it has been only in the past few years that major field performance problems have occurred. The reason for the field failures is directly attributable to the increased interior temperatures found in today's aerodynamically designed automobiles.

The increased use of glass and the reduced angle of the windshield have dramatically increased the internal temperatures of the modern automobile. This is commonly referred to today as "the greenhouse effect". Ten years ago the highest test temperature required by one automobile manufacturer for product environmental temperature stability testing was 100°C (211°F). Most automotive specifications today require extended exposure to temperatures of 121°C (250°F).

A good example of the greenhouse effect is found in the results of a test conducted at South Florida Test Services in Miami, Florida, United States of America, in November of 1988. An automotive instrument pad was instrumented with fifteen thermocouple probes to monitor the temperature of various sections of the pad over a twenty-four hour period.

The test fixture was a closed box that positioned the instrument pad under automotive glass at a 45° angle to the sun. At 11:15 in the morning the surface temperature of the pad registered 111°C (242°F).

Additional environmental testing supports the Florida study and also indicates that in the peak summer months internal car temperatures can exceed 127°C (260°F). These temperatures are sufficient to soften the cover materials so that they conform to the structure of the underlaying urethane foam.

Traditionally a system called "perimeter open pour" has been used to deliver the urethane chemicals to the back side of the cover. The insert is mounted to the lid of a closable mold or foaming tool. After the mechanically mixed urethane is applied to the back side of the cover, the lid is closed, sealing the mold cavity.

The urethane is applied in a bead strip approximately 5 cm (2 inches) wide around the periphery of the cover. After the mold is closed the urethane foam forming materials react to form a foam which ought to fill in the space between the cover and the insert.

In order to produce a defect-free composite article the urethane chemicals must be mixed correctly, chemical temperatures and ratios must be correct, the mold must be at the right temperature, and the mold must be sealed and have a uniform clamping pressure.

Now the urethane has to travel and fill the space between the cover and the insert. The urethane is required to travel up hill, go around corners, go thin and then go thick. In some configurations the urethane has to move laterally as much as 30 to 35 centimetres (12 to 14 inches). While all this is happening the urethane polymerization reaction is going on to create the cell structure of the foam.

An alternative to the open pour process is the "CMIP" or closed mold injection pour process. The CMIP process injects the urethane into a closed mold through a single entry port. Unfortunately, this process has the same type of problems that open pour has. Additionally,dimensional accuracy of the mold and uniform clamping pressures appear to be even more critical than what is required for the open pour process.

As indicated above, no-one has been totally successful in developing the urethane chemistry and tooling to consistently produce a void-free urethane foam in automotive interior trim components.

According to the present invention, there is provided a method of constructing a molded composite article comprised of a foam backing and a cover attached together, comprising the steps of:
providing a mold that has a closable mold cavity,
providing a removable cover having a face extending over a surface of the mold cavity and an exposed back,
spraying a coating of urethane foam forming materials over substantially the whole of the back of the cover while the cover extends over said surface of the mold cavity, and
closing said cavity and bringing a substrate into a desired space relationship to the cover, the urethane foam forming materials reacting to fill a space between the substrate and the back of the cover with a foam to provide a foam backing attaching the substrate to the cover.

Owing to the spraying of the urethane foam forming materials over substantially the whole of the back of the cover, it is possible to produce a defect-free urethane foam backing in a molded composite article, such as an automotive interior trim component comprised of a cover attached to a substrate by the foam backing, more consistently than in those methods that are now available. It is particularly advantageous that the urethane foam forming materials are sprayed onto substantially the entire back of the cover in the mold since then the materials do not need to travel over the back of the cover while reacting.

In order that the invention may be clearly understood and readily carried into effect, reference will now be made, by way of example, to the accompanying drawings, wherein:-
Figure 1 is a partly sectional, perspective view of an automotive interior trim component;
Figure 2 is a vertical section through schematically illustrated apparatus including a closable mold in use in production of the component of Figure 1;
Figure 3 is a vertical section of the closable mold of Figure 2, but at a later stage in the production; and
Figure 4 is a view similar to Figure 3, but at a still later stage in the production.

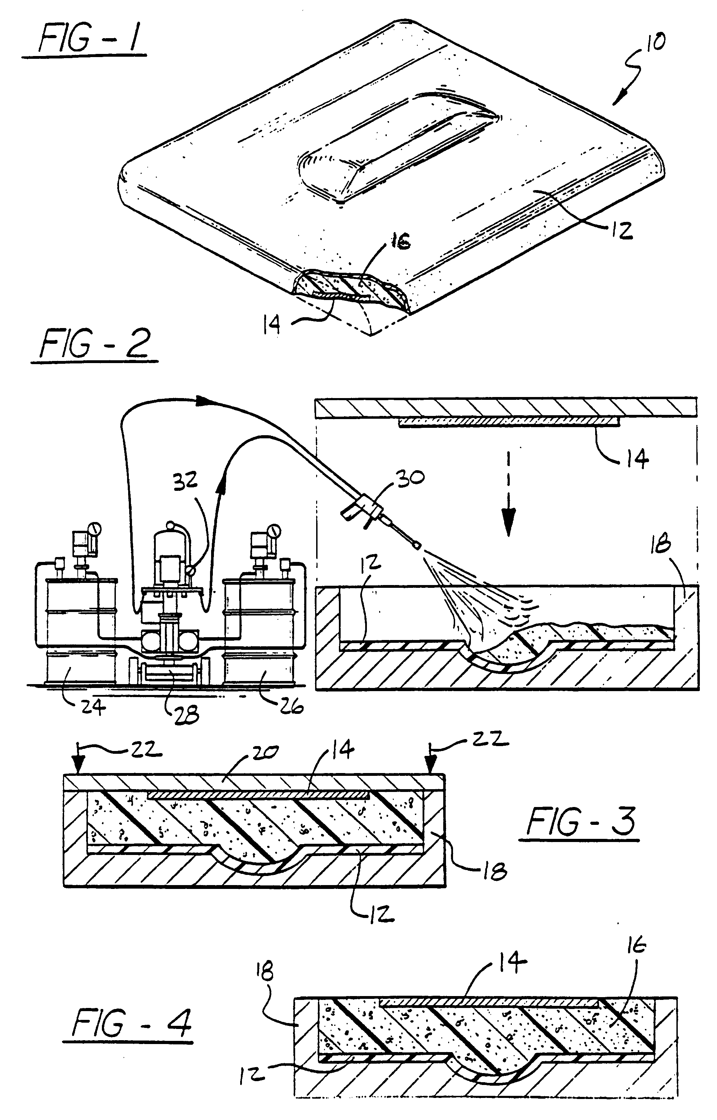

Referring now to the drawing, Figure 1 illustrates a typical article that can be made by the method hereinafter described with reference to the drawing, in the form of an interior trim component 10 for an automobile. The trim component 10 comprises an outer thermoplastic cover 12, a substrate 14 sometimes referred to as an insert, and a shaped foam cushion 16 between the cover 12 and the substrate 14.

The thermoplastic cover 12 can be made of any suitable material that is aesthetically pleasing and feels good to the touch. It may be of vacuum-formed or sprayed thermoplastic or thermoset cover stock, or of a cloth or fabric. Typically the thermoplastic cover 12 is a thin shell of cast polyvinyl chloride (PVC). Other possibilities are thermoplastic urethanes (TPU), thermoplastic polyolefins (TPO)/thermoplastic elastomers (TPE) and polyesters.

The substrate 14 can be made of any suitable structural material that is of sufficient strength for handling and fastening the component 10 to support structure such as an automobile frame or door. The material is also compatible with the material of the cover 12 and the foam cushion 16. The substrate or insert 14 can be made of metal or plastic. Typical examples are steel, aluminum, and structural thermoplastics such as polycarbonate, acrylonitrile- butadiene-styrene (ABS) and styrene-maleic anhydride and their associate copolymer blends.

The primary function of the foam cushion 16 is to fill out the cover 12 and give it a soft feel. The method hereinafter described with reference to the drawing is particularly well suited to constructing automotive interior trim components that have a polyurethane foam cushion, particularly in combination with a cover in the form of a polyvinyl chloride shell. However, other foam cushions are possible such as those made of polyurea-formaldehyde, polyether and polyisocyanurate foams.

Figures 2, 3 and 4 disclose a closable mold 18 for use in producing the interior trim component 10. Briefly, this production comprises providing the cover 12, preferably in the form of a premolded, thermoplastic shell of polyvinyl chloride, in a mold cavity of the closable mold 18 as shown in Figure 2. A coating of urethane foam forming materials is then sprayed onto substantially the entire back surface of the cover 12 in a substantially uniform manner. The mold 18 is then closed by a lid 20 so that the substrate 14 is located in the mold cavity in spaced relationship to the cover 12. The closed mold is clamped shut, as indicated by the force arrows 22 in Figure 3, while the urethane foam forming materials react to fill the space between the cover 12 and the substrate 14 with a polyurethane foam that forms the cushion 16. The polyurethane foam is preferably a semi-rigid type when the chemical reaction is complete. The mold 18 is opened as shown in Figure 4 and the finished article 10 is removed.

The method uses an impingement mixing spray system to deliver a sprayed coating of urethane chemicals and "paint" the back of the cover 12. By "painting" is meant to uniformly spray a urethane coating onto the back side of the outer cover.

After painting the back of cover 12 with the urethane, the lid 20 of the mold 18 is closed allowing the foam to rise in-place and fill the space (which typically averages about half an inch, i.e. about one-and-one-quarter centimetres, in height) between the cover 12 and the substrate 14.

This method has a tremendous advantage over the conventional methods described in the introduction because the urethane chemicals are mechanically sprayed to coat the entire back of the cover 12 which eliminates the need for any lateral movement of the foam forming chemicals to fill in the intricacies of the space between the cover 12 and the substrate 14.

Additionally, adhesion of the urethane foam cushion 16 to the thermoplastic cover 12 is improved considerably with the spray application of the urethane components. Conventional manufacturing methods of perimeter open pour and closed mold injection pour methods require the urethane to flow and fill the space between the cover and the insert. As soon as the urethane is introduced into the mold, the cross linking and foaming action begins. As the reaction and movement of the foam occurs the viscosity of the semi-developed foam increases, thus not "wetting-out" the urethane foam and cover uniformly. This problem causes poor or no adhesion of the urethane to the cover stock in some areas of the composite.

Spraying the urethane onto the cover can eliminate the wet-out problems if the urethane is introduced uniformly to the entire back of the cover at the beginning and wettest point of the reaction profile.

The urethane can be sprayed onto the cover using conventional spray systems that have been developed for spray-coating roof insulation and wall insulation. Such a system is schematically illustrated in Figure 2. Briefly this system comprises respective polyol and isocyanate supplies 24 and 26 connected to a proportioning pump 28 that mixes the components. The mixed components are then delivered to a spray gun 30 along with compressed air from source 32 or an airless delivery system can be used.

### EXAMPLE

Semi-rigid urethane foam spray trials were conducted using a two-component urethane prepolymer consisting of polyol and isocyanate in a one-to-one ratio. The urethane prepolymer was successfully sprayed onto a PVC shell in a closable flat plaque mold and mixed to a sufficient degree to produce a free-rise foam with a uniform void-free cell structure.

A fixed-ratio, manual, airless spray system was first used to deliver the two-component urethane supply to the spray gun. The spray gun used 100 mesh filter screens for the two-component urethane supply. The spray gun was equipped with a static mixer and a flat tip spray nozzle fitted with an outer, air-curtain nozzle that helped contain the urethane overspray.

Subsequent process trials have successfully adapted conventional high-pressure impingement mixing equipment to be used for the delivery system in place of the fixed-ratio, manual, airless spray system.

Methylene chloride or the ether based recyclable flush systems specifically designed for RIM (Reaction Injection Molding) can be used for flushing and/or cleaning both the airless and high-pressure impingement mixing systems.

A high-pressure, plural-component urethane pump system was used for the initial airless spray trials.

The two-stream urethane supply was delivered to the spray gun in equal proportions at 13MPa (1875 psi).

Both chemical streams were heated to 43°C (110°F) and were recirculated from the terminal block at the spray gun back to chemical holding tanks.

## Claims

1. A method of constructing a molded composite article (10) comprised of a foam backing (16) and a cover (12) attached together, comprising the steps of:
providing a mold (18) that has a closable mold cavity,
providing a removable cover(12) having a face extending over a surface of the mold cavity and an exposed back,
spraying a coating of urethane foam forming materials over substantially the whole of the back of the cover (12) while the cover (12) extends over said surface of the mold cavity, and
closing said cavity and bringing a substrate (14)into a desired space relationship to the cover (12),the urethane foam forming materials reacting to fill a space between the substrate (14) and the back of the cover (12) with a foam to provide a foam backing (16)attaching the substrate (14) to the cover (12).

2. A method according to claim 1, wherein said closing of said cavity comprises closing said cavity with a mold lid (20) which carries said substrate (14)and the closing of which brings said substrate (14)into said relationship to the cover (12).

3. A method according to claim 1 or 2, wherein said substrate (14) is a structural member.

4. A method according to any preceding claim, wherein the cover (12) is provided in the form of a premolded thermoplastic shell (12) of polyvinyl chloride.

5. A method according to any preceding claim, wherein said foam backing (16) comprises a semi-rigid polyurethane foam.

6. A method according to any preceding claim, wherein the foam forming materials are an isocyanate and a polyol that are sprayed onto the back of the cover (12).

7. A method according to any preceding claim, wherein said coating is sprayed in a substantially uniform manner over substantially the whole of the back of the cover (12).

## Patentansprüche

1. Verfahren zum Aufbau eines Verbundformteils (10), das aus einer Schaumstoffkaschierung (16) und einer Abdeckung (12) besteht, die miteinander verbunden sind, umfassend die folgenden Schritte:
Bereitstellen einer Form (18) mit einer verschließbaren Formhöhlung;
Bereitstellen einer abnehmbaren Abdeckung (12), die eine Vorderseite, die sich über eine Fläche der Formhöhlung erstreckt, sowie eine freiliegende Rückseite aufweist;
Sprühen einer Beschichtung aus Urethanschaum-bildenden Materialien im wesentlichen über die gesamte Rückseite der Abdeckung (12), während sich die Abdeckung (12) über die Fläche der Formhöhlung erstreckt; und
Schließen der Formhöhlung und Bringen eines Substrats (14) in eine gewünschte räumliche Beziehung zu der Abdeckung (12), wobei die Urethanschaum-bildenden Materialien so abreagieren, dass sie einen Zwischenraum zwischen dem Substrat (14) und der Rückseite der Abdeckung (12) mit einem Schaumstoff füllen, so dass man eine Schaumstoffkaschierung (16) erhält, die das Substrat (14) an der Abdeckung (12) befestigt.

2. Verfahren gemäß Anspruch 1, wobei das Schließen der Formhöhlung das Schließen der Formhöhlung mit einem Formdeckel (20) umfasst, der das Substrat (14) trägt und dessen Schließen das Substrat (14) in die Beziehung zu der Abdeckung (12) bringt.

3. Verfahren gemäß Anspruch 1 oder 2, wobei das Substrat (14) ein Bauelement ist.

4. Verfahren gemäß einem der vorstehenden Ansprüche, wobei die Abdeckung (12) in Form einer vorgeformten thermoplastischen Schale (12) aus Polyvinylchlorid bereitgestellt wird.

5. Verfahren gemäß einem der vorstehenden Ansprüche, wobei die Schaumstoffkaschierung (16) einen halbharten Polyurethanschaum umfasst.

6. Verfahren gemäß einem der vorstehenden Ansprüche, wobei es sich bei den schaumbildenden Materialien um ein Isocyanat und ein Polyol handelt, die auf die Rückseite der Abdeckung (12) gesprüht werden.

7. Verfahren gemäß einem der vorstehenden Ansprüche, wobei die Beschichtung in einer im wesentlichen gleichmäßigen Weise im wesentlichen über die gesamte Rückseite der Abdeckung (12) gesprüht wird.

## Revendications

1. Un procédé de fabrication d'un objet composite moulé (10) comprenant un dos en mousse (16) et un recouvrement (12) fixés ensemble, comprenant les étapes consistant à :
prévoir un moule (18) qui présente une cavité de moulage pouvant être fermée,
prévoir un recouvrement amovible (12) présentant une face s'étendant sur une surface de la cavité de moulage et un dos à nu,
effectuer une pulvérisation d'un revêtement de matières de formation de mousse d'uréthanne sur pratiquement l'ensemble du dos du recouvrement (12) alors que le recouvrement (12) s'étend sur ladite surface de la cavité de moulage, et
fermer ladite cavité et amener un substrat (14) dans une relation d'espace désiré par rapport au recouvrement (12), les matières de formation de mousse d'uréthanne réagissant pour remplir de mousse un espace entre le substrat (14) et le dos du recouvrement (12) afin de créer un support de mousse (16) fixant le substrat (14) au recouvrement (12).

2. Un procédé selon la revendication 1, dans lequel ladite étape consistant à fermer ladite cavité comprend la fermeture de ladite cavité à l'aide d'un couvercle de moule (20) qui porte ledit substrat (14) et dont la fermeture amène ledit substrat (14) dans ladite relation par rapport au recouvrement (12).

3. Un procédé selon la revendication 1 ou 2, dans lequel ledit substrat (14) est un élément de structure.

4. Un procédé selon une quelconque revendication précédente, dans lequel le recouvrement (12) est prévu sous la forme d'une coquille thermoplastique prémoulée (12) en polychlorure de vinyle.

5. Un procédé selon une quelconque revendication précédente, dans lequel ledit support de mousse (16) comprend une mousse de polyuréthanne semi-rigide.

6. Un procédé selon une quelconque revendication précédente, dans lequel les matières de formation de mousse sont constituées par un isocyanate et un polyol qui sont amenés par pulvérisation sur le dos du recouvrement (12).

7. Un procédé selon une quelconque revendication précédente, dans lequel ledit recouvrement est amené par pulvérisation d'une manière sensiblement uniforme sur pratiquement l'ensemble du dos du recouvrement (12).
